# EUROPEAN PATENT APPLICATION

(11) **EP 4 553 552 A1**
(43) Date of publication of application: **14.05.2025**
(21) Application number: 23838978.7
(22) Date of filing: 12.07.2023
(51) Int. Cl.: G02B 6/44

(54) **OPTICAL DISTRIBUTION APPARATUS, OPTICAL DISTRIBUTION NETWORK UNIT, AND NETWORK SYSTEM**

(30) Priority: 12.07.2022 CN 202210814181
(71) Applicant: ZTE Corporation, Shenzhen, Guangdong 518057 (CN)
(72) Inventor: ZHU, Songlin, Shenzhen, Guangdong 518057 (CN); ZHANG, Weiliang, Shenzhen, Guangdong 518057 (CN)
(74) Representative: Ziebig Hengelhaupt Intellectual Property Attorneys Patentanwaltskanzlei PartGmbB
(86) International application number: PCT/CN2023/106988
(87) International publication number: WO 2024/012488

(57) **Abstract**

An optical distribution apparatus (100), an optical distribution network unit (300), and a network system. The optical distribution apparatus (100) comprises: a star-shaped coupling module (110), which is provided with at least one first public port (111), a plurality of first side branch interfaces (112) and a plurality of second side interfaces (113); a plurality of annular members (120); and wavelength division multiplexing modules, which are arranged in a manner of corresponding to the annular members (120) on a one-to-one basis, wherein a third connection port (3) of each annular member (120) is connected to one second side interface (113); first connection ports (1) of the annular members (120) are connected to the first side branch interfaces (112) one by one; and the wavelength division multiplexing modules are each configured to multiplex a first downlink optical signal to a corresponding first connection port (1), and combine the first downlink optical signal with an uplink optical signal which is output by the first side branch interface (112).

## Description

### CROSS-REFERENCE TO RELATED APPLICATIONS

The present application is proposed based on and claims the priority of the Chinese patent application with the application No. 202210814181.6 and the filing date of July 12, 2022, the entire content of which is incorporated herein by reference.

### TECHNICAL FIELD

Embodiments of the present application relate to, but are not limited to, the technical field of communications, in particular to an optical distribution apparatus, an optical distribution network unit, and a network system.

### BACKGROUND

With the rapid growth of today's communications services, a passive optical network (PON), which can provide a higher bandwidth, has been rapidly developed. The PON is a point-to-multipoint network. A system mainly consists of an optical line terminal (OLT) at a local end, an optical network apparatus (e.g., an optical network unit (ONU) or an optical network termination (ONT)) at a user end, and an optical distribution network (ODN). An optical distribution network of the passive optical network is an optical distribution network used for performing branching/coupling or multiplexing/demultiplexing on an optical signal between the optical line terminal and the optical network termination, and may include an optical fiber, an optical fiber connector, a wavelength division multiplexer and other optical passive devices. In the related art, an optical distribution network is usually formed by combining splitters, such as a 3xN splitter, and a 1xN splitter. However, in the optical distribution network of the above splitter networking, an excessive loss of optical power of uplink and downlink signals will be caused by the splitters twice during a direct communication between optical network apparatuses, and it is not applicable to an existing PON scenario of a single-fiber application, such as fiber to the home (FTTH). Therefore, there is an urgent need for a structure or deployment method that reduces the loss of the optical power during the direct communication between the optical network apparatuses.

### SUMMARY

The following is an overview of topics described in detail herein. This overview is not intended to limit the scope of protection of the claims.

Embodiments of the present application provide an optical distribution apparatus, an optical distribution network unit, and a network system.

In a first aspect, an embodiment of the present application provides an optical distribution apparatus, including: a star-shaped coupling module, wherein two sides of the star-shaped coupling module are respectively provided with a plurality of first side interfaces and a plurality of second side interfaces, and each of the second side interfaces communicates with a plurality of the first side interfaces; and a plurality of the first side interfaces include a plurality of first side branch interfaces and at least one first public port; a plurality of annular members, wherein the annular members are provided with unidirectionally communicating first connection ports, second connection ports and third connection ports, the first connection ports are connected to the first side branch interfaces in one-to-one correspondence; the third connection ports are connected to one of the second side interfaces; and the second connection ports are configured to output input uplink optical signals from the communicating second side interfaces to the first public port and a plurality of the first side branch interfaces; and a plurality of wavelength division multiplexing modules, wherein the plurality of wavelength division multiplexing modules are in one-to-one correspondence with the plurality of annular members; the wavelength division multiplexing modules are each configured to combine a first downlink optical signal with an uplink optical signal output by the corresponding first side branch interface to the corresponding first connection port; and the first downlink optical signal is an optical signal obtained by splitting a downlink optical signal input to the first public port.

In a second aspect, an embodiment of the present disclosure further provides an optical distribution network unit, including an optical distribution apparatus according to any one of the first aspect.

In a third aspect, an embodiment of the present disclosure further provides an optical network system, including: at least one optical line terminal; an optical distribution network unit of the second aspect; and a plurality of optical network apparatuses, connected to the optical line terminal through an optical distribution apparatus.

In a fourth aspect, an embodiment of the present disclosure further provides an optical network system, including: at least one optical line terminal; an optical distribution network unit of the second aspect, wherein one optical distribution apparatus is provided, and the optical line terminals are connected to first public ports of the optical distribution apparatus in one-to-one correspondence; and a plurality of optical network apparatuses, respectively connected to a second connection port of one of annular members of the optical distribution apparatus one by one.

In a fifth aspect, an embodiment of the present disclosure further provides an optical network system, including: at least one optical line terminal; an optical distribution network unit of the second aspect, wherein the optical distribution network unit further includes one optical distribution apparatus and a plurality of second light splitting modules, and the optical line terminals are connected to first public ports of the optical distribution apparatus in one-to-one correspondence; and third public ports of the second light splitting modules are respectively connected to second connection ports of annular members of the optical distribution apparatus one by one; and a plurality of optical network apparatuses, all connected to a plurality of second branch ends of the second light splitting modules one by one.

In a sixth aspect, an embodiment of the present disclosure further provides an optical network system, including: at least one optical line terminal; an optical distribution network unit of the second aspect, wherein a plurality of optical distribution apparatuses are provided, the optical distribution network unit further includes at least one third light splitting module, fourth public ports of the third light splitting module are connected to the optical line terminals one by one; and first public ports of a plurality of the optical distribution apparatuses are respectively connected to a plurality of third branch ends of the third light splitting module one by one; and a plurality of optical network apparatuses, all connected to second connection ports of annular members of the optical distribution apparatuses one by one.

### BRIEF DESCRIPTION OF DRAWINGS

FIG. 1 is a schematic diagram of an optical distribution apparatus of an embodiment in embodiments of the present application.
FIG. 2 is a schematic diagram of an optical distribution apparatus of another embodiment in embodiments of the present application.
FIG. 3 is a schematic diagram of a star-shaped coupling module in an embodiment of the present application.
FIG. 4 is a schematic diagram of existing PON networking.
FIG. 5 is a schematic diagram of networking of a network system of a first embodiment in embodiments of the present application.
FIG. 6 is a schematic structural diagram of an ONU in the schematic diagram of the networking of the network system of FIG. 5 in an embodiment of the present application.
FIG. 7 is a schematic diagram of networking of a network system of a second embodiment in embodiments of the present application.
FIG. 8 is a schematic diagram of networking of a network system of a third embodiment in embodiments of the present application.

### Reference numerals:

optical distribution apparatus 100, star-shaped coupling module 110, first public port 111, first side branch interface 112, second side interface 113, annular member 120, first wavelength division multiplexing member 131, third wavelength division multiplexing member 132, second wavelength division multiplexing member 133, first light splitting module 140, second public port 141, first branch end 142,
optical line terminal 200,
optical distribution network unit 300, second light splitting module 310, third public port 311, third light splitting module 320, first optical distribution apparatus 330, second optical distribution apparatus 340,
optical network apparatus 400, and
three-port circulator 500.

### DETAILED DESCRIPTION

In order to make objectives, technical solutions and advantages of the present application more clear and understandable, the present application is further illustrated in detail below in conjunction with accompanying drawings and embodiments. It should be understood that the embodiments described herein are only used to explain the present application and are not used to limit the present application.

It needs to be noted that although the division of functional modules is made in a schematic diagram of an apparatus and a logical sequence is shown in a flowchart, in some cases, steps shown or described may be executed differently from the division of modules in the apparatus or the sequence in the flowchart. Terms "first", "second" and the like in the specification, claims and the above accompanying drawings are used to distinguish similar objects, and need not be used to describe a specific order or sequence.

With the rapid growth of today's communications services, a passive optical network (PON), which can provide a higher bandwidth, has been rapidly developed. The PON is a point-to-multipoint network. A system mainly consists of an optical line terminal (OLT) at a local end, an optical network apparatus (e.g., an optical network unit (ONU) or an optical network termination (ONT)) at a user end, and an optical distribution network (ODN). An optical distribution network of the passive optical network is an optical distribution network used for performing branching/coupling or multiplexing/demultiplexing on an optical signal between the optical line terminal and the optical network termination, and may include an optical fiber, an optical fiber connector, a wavelength division multiplexer and other optical passive devices. In the related art, an optical distribution network is usually formed by combining splitters, such as a 3xN splitter, and a 1xN splitter. However, in the optical distribution network of the above splitter networking, during a direct communication between optical network apparatuses (such as sending of a burst signal), an optical signal sent by the optical network apparatus needs to be first output by a public port of a splitter once before being forwarded, and during forwarding, it further needs to pass through the splitter once before it can be received by other optical network apparatuses that need communications. As a result, there is a loss of optical power produced by two passes through the splitter, resulting in an excessive loss of optical power of uplink and downlink signals, and thus it is not applicable to an existing PON scenario of a single-fiber application, such as fiber to the home (FTTH). Therefore, there is an urgent need for a structure or deployment method that reduces the loss of the optical power during the direct communication between the optical network apparatuses. Based on this, embodiments of the present application propose an optical distribution apparatus, an optical distribution network unit, and a network system that can reduce the loss of optical power during the direct communication between the optical network apparatuses.

It needs to be noted that only some of connection relationships of a first side interface, a second side interface 113, a second side interface 113, and a first branch end 142 are embodied in all the accompanying drawings in the present application, and for the same star-shaped coupling module 110, the connection of an optical network apparatus 400 may be performed with reference to the connection embodied in the drawings. Similarly, a splitter, as well as a first light splitting module 140, a second light splitting module 310, and a third light splitting module 320, all embody only a part of the connection of optical fiber lines. It needs to be noted that in the following embodiments, all descriptions are made with the optical network apparatus 400 being an ONU.

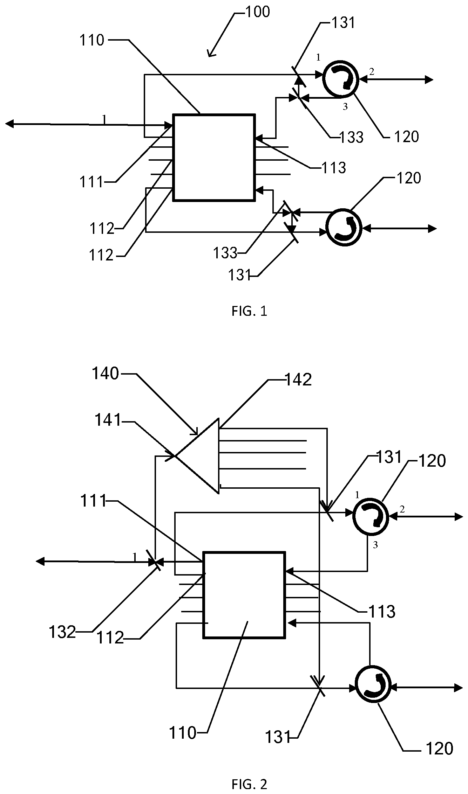

Referring to FIG. 1 to FIG. 8, an optical distribution apparatus 100 proposed according to the embodiments of the present application, includes:
a star-shaped coupling module 110, wherein two sides of the star-shaped coupling module 110 are respectively provided with a plurality of first side interfaces and a plurality of second side interfaces 113, and each of the second side interfaces 113 communicates with a plurality of the first side interfaces; and a plurality of the first side interfaces include a plurality of first side branch interfaces 112 and at least one first public port 111;
a plurality of annular members 120, wherein the annular members 120 are provided with unidirectionally communicating first connection ports, second connection ports and third connection ports, the first connection ports are connected to the first side branch interfaces 112 in one-to-one correspondence; the third connection ports are connected to one of the second side interfaces 113; and the second connection ports are configured to output input uplink optical signals from the communicating second side interfaces 113 to the first public port 111 and a plurality of the first side branch interfaces 112; and
a plurality of wavelength division multiplexing modules, wherein the plurality of wavelength division multiplexing modules are in one-to-one correspondence with the plurality of annular members 120; the wavelength division multiplexing modules are each configured to combine a first downlink optical signal with an uplink optical signal output by the corresponding first side branch interface 112 to the corresponding first connection port; and the first downlink optical signal is an optical signal obtained by splitting a downlink optical signal input to the first public port 111.

Each of the third connection ports is connected to one second side interface 113, each of the second side interfaces 113 communicates with the plurality of first side interfaces, the first side interfaces are connected to the corresponding first connection ports, therefore, for each uplink optical signal input through the corresponding second connection port, after passing through the star-shaped coupling module 110 once, it is looped back, by each of the first side branch interfaces 112, to an optical path where the first side branch interface 112 and the corresponding first connection port are located to be combined with the first downlink signal and output from the second connection port, so as to realize a direct communication with a plurality of optical network apparatuses 400 after passing through the star-shaped coupling module 110 once. Moreover, uplink optical signals of the plurality of second side interfaces 113 are further sent to the first public port 111 to be output, so that uplink direction transmission of single-fiber services can be realized when the uplink optical signals are service signals. Similarly, after the downlink optical signal is divided into a plurality of first downlink optical signals, the first downlink optical signals are multiplexed to the first connection ports through the corresponding wavelength division multiplexing modules and are output from the second connection ports, realizing the downlink direction transmission of service signals. Compared to a solution in the related art adopting a splitter, the optical distribution apparatus of the embodiments of the present application is adopted to perform service transmission in a single-fiber scenario, and at the same time enables the optical signal for the direct communication between the optical network apparatuses 400 to only need to pass through the star-shaped coupling module once without reflection, and the loss of optical power is lower, which is favorable for a practical application. Based on this, the optical distribution apparatus 100, the optical distribution network unit 300, and the network system of the embodiments of the present application can reduce the loss of optical power during the direct communication between the optical network apparatuses 400.

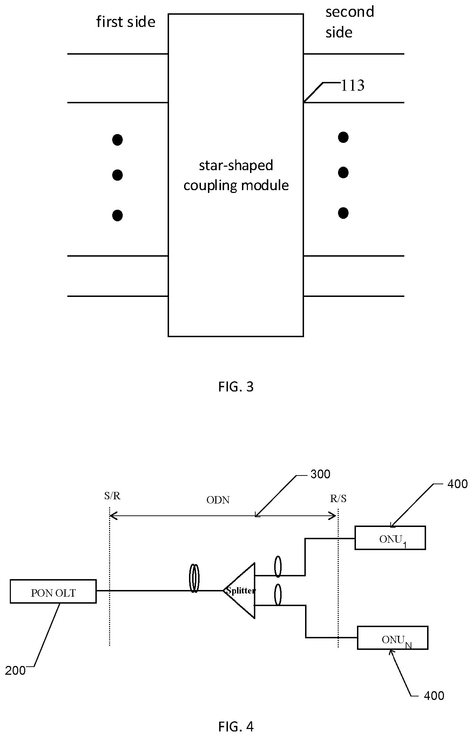

It needs to be noted that, as shown with reference to FIG. 3, ones on a first side of the star-shaped coupling module 110 are all first side interfaces, ones on a second side of the star-shaped coupling module 110 are all second side interfaces, uplink optical signals entering from the second side interfaces 113 will be output from any first side interface, and a downlink optical signal input from the first public port 111 will be output from any second side interface 113.

It needs to be noted that in some embodiments, any first side interface and any second side interface 113 of the star-shaped coupling module 110 communicate with each other, and any of the plurality of first side interfaces may serve as the first public port 111. In an actual application, which one or more of the first side interfaces serves as the first public port 111 and remaining first side interfaces serve as the first side branch interfaces 112 may be artificially determined according to actual networking needs. The number of first public ports 111 is selectively set according to the number of OLTs connected to the ports. At this time, the second side interfaces 113 in the same number as the first side branch interfaces 112 may be used to be connected to ONUs, and when applied, the second side interfaces 113 are connected to the ONUs so that the direct communication between the plurality of ONUs as well as service transmission between the OLTs and the ONUs may be realized.

It needs to be noted that in some other embodiments, only the second side interfaces 113 are in communication unidirectionally to a transmission direction of any first side interface, and the first public port 111 is in communication unidirectionally to a transmission direction of any second side interface 113. In the actual application, it is necessary to connect the set first public port 111 to the OLT.

It needs to be noted that whether the number of the first side interfaces and the number of the second side interfaces 113 are consistent is not limited by the present application.

In some embodiments, taking the number of the second side interfaces 113 and the number of the first side interfaces being set consistent as an example, after it is determined that the number of the first public ports 111 is n1, the second side interfaces 113 with the same number n1 are discarded from the plurality of second side interfaces 113, so that all the other second side interfaces 113 may be used to be connected to one ONU, and while realizing normal processing of the service, the ONUs can communicate with each other only once through the star-shaped coupling module 110. Assuming that the number of the first side interfaces of the star-shaped coupling module 110 is set to *M* and the number of the first public ports 111 is 1, the number of the first side branch interfaces 112 is *M-*1*.* Correspondingly, the number of the second side interfaces 113 that may be used for the ONUs is *M*-1. At this time, one star-shaped coupling module 110 is connected to at most *M*-1 ONUs.

In some embodiments, taking the example that the number of the second side interfaces 113 and the number of the first side interfaces are inconsistent, the number of the second side interfaces 113 is consistent with the maximum number of ONUs actually supported, and the number of the first side interfaces is consistent with the number of the second side interfaces 113 and the number of the first public ports 111 allowed to be set. If the specification of the second side interfaces 113 is set to 5 and the number of the first public ports 111 allowed to be set is 3, then the number of the first side interfaces is 8.

It needs to be noted that light splitting processing of the downlink optical signal *λ_{down}* may be that a plurality of first downlink optical signals are obtained by light splitting processing of the star-shaped coupling module 110 itself and are output by the second side interfaces 113, as shown in FIG. 1. In some other embodiments, a plurality of first downlink optical signals may also be obtained after light splitting processing is performed by other light splitting modules on the downlink optical signal input to the first public port 111, and are multiplexed to the first connection ports 1, and when the light splitting modules are splitters, it may refer to FIG. 2.

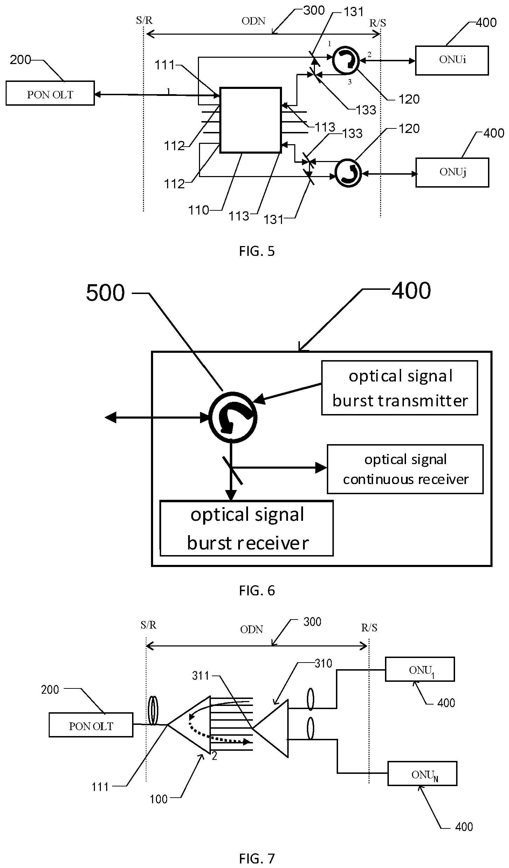

It needs to be noted that, in the actual application, with reference to existing splitter networking shown in FIG. 4, the optical distribution apparatus 100 of the embodiment of the present application can directly replace the splitter (i.e., Spliter in the illustration) in the existing networking, and may also be deployed in new networking. The optical distribution apparatus 100 of the embodiment of the present application may be applied to a single-fiber-to-the-home scenario as well as other PON application scenarios, for which the embodiment of the present application does not limit the use of the optical distribution apparatus 100. In some embodiments, referring to FIG. 5, the first public port 111 is connected to the optical line terminal 200, thereby realizing a single-fiber-to-the-home scenario.

It needs to be noted that the optical distribution apparatus 100 in the embodiment of the present application may be an integrated part or may be a combination of a separate star-shaped coupling module 110, annular members 120, and multiplexing module. In some embodiments, taking the combination as an example, a star-shaped coupler is used as the star-shaped coupling module 110, circulators are used as the annular members 120, and a plurality of wavelength division multiplexers are combined to form the multiplexing module. In an actual application, the star-shaped coupler, the plurality of circulators, and the plurality of wavelength division multiplexers are combined to obtain the optical distribution apparatus 100 according to an optical path direction, and the number of the circulators is consistent with the number of ONUs in the actual application, and may also be consistent with the number of the first side branch interfaces 112, which is not limited by the embodiment of the present application. Taking the number of the first public port 111 as 1 as an example, one of the first side interfaces on one side of the star-shaped coupler is used as the first public port 111, and one of the second side interfaces 113 on the other side of the star-shaped coupler is discarded. At this time, it can be realized that the uplink optical signal entering the second side interface 113 is output from any first side interface, and the first side interface that is not used as the first public port 111 can loop back this uplink signal to a first connection port of the circulator. The star-shaped coupler outputs the first downlink optical signals from the downlink optical signal *λᵤₚ* input by the first public port 111 from any second side interface and multiplexes each of the output first downlink optical signals to the first connection port of one circulator through the wavelength division multiplexer. In some other embodiments, other structural combinations may also be adopted to realize functions of the star-shaped coupling module as in the present application, which is not limited by the embodiment of the present application.

It needs to be noted that by applying the optical distribution apparatus 100 of the embodiment of the present application, wavelengths of the uplink optical signal *λᵤₚ* and the downlink optical signal *λ_{down}* used for service processing may be multiplexed when there is a need for the optical network apparatuses 400 to communicate with each other. In some embodiments, taking a PON scenario supporting a burst mode as an example, a wavelength of the uplink optical signal used for service processing is *λᵤₚ,* and a wavelength of the downlink optical signal used for service processing is *λ_{down}.* In the burst mode, a wavelength of a burst signal may be set to *λᵤₚ*. At this time, there is no need to use a third wavelength as the wavelength of the burst signal, thus saving spectrum resources.

It needs to be noted that, taking the second side interfaces 113 being connected to the ONUs as an example, in the burst mode, in the related art, a fiber Bragg grating is usually arranged at a public end of the splitter to reflect the optical signal output by the public end of the splitter through the fiber Bragg grating. At this time, a frequency division multiplexing technique is utilized for a communication of the burst signal, in the embodiment of the present application, the loopback is realized by connecting the first connection port 121 to the first side interface, so for a plurality of ONUs, a time division multiplexing manner may be adopted for the communication during sending of the burst signal, and comparatively speaking, the amount of information for which the ONUs can communicate with each other in the embodiment of the present application may be set to be more. In some other embodiments, the burst signal is routed back and forth by OLTs, the OLTs need re-queuing and modulation so that each ONU can receive the burst signal, whereas in the present application, there is no need for re-routing, re-queuing, and re-modulation for the direct loopback, which enhances the reliability and energy efficiency of the network, i.e., a downlink bandwidth of the OLTs sending re-modulated communication signals between the ONUs to the ONUs is saved, and the utilization of the downlink bandwidth is improved. The direct communication between the ONUs can also significantly reduce communication latency.

It needs to be noted that, in the embodiment of the present application, a real service wavelength may be output through the first public port 111 or the plurality of second connection ports 2, therefore, in the FTTH scenario, it is necessary only to replace the splitter of the FTTH with the splitter 100 of the present application, and then it is possible to use existing other devices to realize a single fiber optic resource to a user without additionally deploying optical fibers, which makes the transformation simpler.

It may be understood, with reference to FIG. 1, that the wavelength division multiplexing modules each include a first wavelength division multiplexing member 131 and a second wavelength division multiplexing member 133, the first wavelength division multiplexing member is arranged between the first connection port 1 of the corresponding annular member 120 and the corresponding first side branch interface 112; and the second wavelength division multiplexing member 133 is arranged between the third connection port 3 of the corresponding annular member 120 and the corresponding second side interface 113. By arranging the first wavelength division multiplexing members 131 and the second wavelength division multiplexing members 133, outputs of the second side interfaces 113 are multiplexed to the first connection ports 1 in a downstream direction to realize the transmission of downstream services.

It needs to be noted that the first wavelength division multiplexing members 131 are each configured to combine a first downlink optical signal with an uplink optical signal output by the corresponding first side branch interface 112 to the corresponding first connection port. The second wavelength division multiplexing member 133 is configured to output a first downlink optical signal output from the second side interface 113 from a demultiplexing port to a corresponding multiplexing port of the first wavelength division multiplexing member 131.

It needs to be noted that in some embodiments, a first wavelength division multiplexing member 131, a third wavelength division multiplexing member 132, a second wavelength division multiplexing member 133, and a first light splitting module 140 are arranged in the optical distribution apparatus 100. When in a combined state, the optical distribution apparatus 100 may be obtained by combining the parts according to the actual application scenario. When the optical distribution apparatus 100 is in an integrated mode, by arranging a plurality of switches, the optical distribution apparatus 100 may form an optical signal transmission direction shown in FIG. 1 in some cases or the optical distribution apparatus 100 may form an optical signal transmission direction shown in FIG. 2 in other cases, which is not limited by the embodiment of the present application.

It may be understood, with reference to FIG. 2, that the wavelength division multiplexing modules each include a first wavelength division multiplexing member 131, and the first wavelength division multiplexing member 131 is arranged between the first connection port 1 of the corresponding annular member 120 and the corresponding first side branch interface 112. By arranging the first wavelength division multiplexing member 131 to multiplex the first downlink signal onto an optical path of the first side branch interface 112 and the first connection port 1, the first downlink signal can be output from the first connection port 1 to the second connection port 2.

It needs to be noted that the first connection port 1 and the first side branch interface 112 are connected by optical fibers.

In some embodiments, as shown with reference to FIG. 2, an external first light splitting module 140 may be arranged with first branch ends 142 connected to the first wavelength division multiplexing members 131 respectively, wherein the number of the first branch ends 142 of the first light splitting module 140 is greater than the number of the first wavelength division multiplexing members 131. After the downlink optical signal *λ_{down}* is output from the first branch end 142 of the first light splitting module 140, it is multiplexed by the first wavelength division multiplexing member 131 to the optical path between the first connection port 1 and the first side branch interface 112, and the downlink service and the uplink optical signal are combined and then jointly output from the second connection port. When the second public port 141 of the external first light splitting module 140 and the first public port 111 of the optical distribution apparatus 100 are multiplexed by the external third wavelength division multiplexing member 132, transmission of uplink services may be realized. By means of the first light splitting module 140, an optical signal of one wavelength can be divided into a plurality of different-power optical signals to be output respectively from the first branch ends 142. When the optical distribution apparatus 100 is obtained by combining, in an actual application, remaining parts, the first light splitting module 140 and the third wavelength division multiplexing member 132, may be purchased according to the application scenario and combined to realize the structure shown in FIG. 2, and in this regard, there is no limitation on a structural form of the optical distribution apparatus 100 of the embodiment of the present application.

In some embodiments, referring to FIG. 1, an external second wavelength division multiplexing member 133 may also be arranged to realize multiplexing of the first downlink signal as shown in FIG. 1.

It may be understood, with reference to FIG. 2, that the wavelength division multiplexing modules each further include a third wavelength division multiplexing member 132; and the third wavelength division multiplexing member 132 is connected to the first public port 111.

It needs to be noted that the third wavelength division multiplexing member 132 is configured to output a downlink optical signal from a demultiplexing port to the second public port 141 of the first light splitting module 140.

It needs to be noted that by arranging the first wavelength division multiplexing member 131 and the third wavelength division multiplexing member 132 in the optical distribution apparatus 100, it is possible to match only one first light splitting modules 140, and at this time, the deployment for the optical distribution apparatus 100 is simpler.

It may be understood, with reference to FIG. 2, that the optical distribution apparatus 100 further includes a first light splitting module 140, a second public port 141 of the first light splitting module 140 is connected to the third wavelength division multiplexing member 132, and a plurality of first branch ends 142 of the first light splitting module 140 are respectively connected to the first wavelength division multiplexing members 131 of a plurality of the wavelength division multiplexing modules.

It needs to be noted that the deployment manner of the optical distribution apparatus 100 can be further simplified by arranging the first light splitting module 140, the first wavelength division multiplexing member 131 and the third wavelength division multiplexing member 132 all in the optical distribution apparatus 100.

In some embodiments, referring to FIG. 2, taking the star-shaped coupling module 110 being an (N+1)x(N+1) star-shaped coupler as an example, in addition to a branch fiber port No. 1 on a left side of the (N+1)x(N+1) star-shaped coupler that is connected to the OLT through a backbone fiber, other N ports on the left side may be connected to a burst optical signal receiver of an operating wavelength *λᵤₚ* of the ONU through a distribution fiber and a corresponding distribution fiber on a right side. A backbone fiber port No. 1 of the OLT on the left side of the star-shaped coupler corresponds to a distribution fiber port No. 1 on the right side and is discarded, i.e., it is not connected to any ONU, so that the branch end connected to the backbone fiber port No. 1 forms the first public port 111. A downlink continuous optical signal at an operating wavelength *λ_{down}* on the OLT side and an uplink burst optical signal at an operating wavelength *λᵤₚ* are demultiplexed by the third wavelength division multiplexer 132 and then enter an ordinary 1xN splitter to be split into N branch fibers for output. The uplink burst optical signal at an ONU operating wavelength *λᵤₚ* enters the second connection port 2 of the annular member 120 through the distribution fiber, is output from the third connection port 3, is transmitted through the fiber on the right side of the star-shaped coupler to the left side, and is output from any port on the left side. The uplink burst optical signal is output from a port No. 1 on the left side of the star-shaped coupler to reach the OLT, and the uplink burst optical signals are output from the other N ports on the left side. An uplink burst optical signal at an operating wavelength *λᵤₚ* output from a certain port on the left side is combined with a downlink optical signal at an operating wavelength *λ_{down}* output from a corresponding ordinary beam splitter through the third wavelength division multiplexing member 132, enters the first connection port 1 of the annular member 120, and is output from the second connection port 2.

It may be understood that in a second aspect, an optical distribution network unit 300 proposed according to an embodiment of the present disclosure includes at least one optical distribution apparatus 100 according to any one of the first aspect. A deployment manner of a PON system can be simplified by arranging the optical distribution network unit 300 including the optical distribution apparatus 100.

It may be understood, with reference to FIG. 5 to FIG. 8, in a third aspect, that a network system provided according to an embodiment of the present application includes:
at least one optical line terminal 200;
an optical distribution network unit 300 of the second aspect; and
optical network apparatuses 400, wherein the plurality of optical network apparatuses 400 are arranged and connected to the optical line terminal 200 through an optical distribution apparatus 100.

It needs to be noted that with reference to the embodiments shown in FIG. 5 to FIG. 8, the use of at least one optical distribution apparatus 100 in the optical distribution network unit 300 reduces the loss of power once compared to the scenarios in which splitters are used, and therefore reduces the loss of power in the communication between the optical network apparatuses 400.

It may be understood, with reference to FIG. 5, that in a fourth aspect, a network system provided according to the present application includes:
at least one optical line terminal 200;
an optical distribution network unit 300 according to the second aspect, wherein an optical distribution apparatus 100 is arranged, and the optical line terminals 200 are connected to first public ports 111 of the optical distribution apparatus 100 in one-to-one correspondence; and
a plurality of optical network apparatuses 400, respectively connected to a second connection port of one of annular members 120 of the optical distribution apparatus 100 one by one.

In some embodiments, referring to FIG. 3 and FIG. 4, the PON system consists of an OLT, an ONU at the user end, and a splitter 100 as an optical distribution network (ODN). Under the condition that the existing PON wavelength planning remains unchanged, the OLT device remains unchanged, and other optical distribution network devices except for the splitter remain unchanged, by replacing an original 1xN splitter with the optical distribution apparatus 100 in the present application and replacing an original ONU with a new ONU, a point-to-multipoint communication between the optical line terminal 200 (OLT) and the optical network unit (ONU) is realized to be compatible with the direct internal communication between the optical network terminals (ONUs).

In some embodiments, referring to FIG. 5 and FIG. 6, taking the star-shaped coupling module 110 being an (N+1)x(N+1) star-shaped coupler as an example, in addition to a branch fiber port No. 1 (corresponding to the first public port 111) on a left side of the (N+1)x(N+1) star-shaped coupler that is connected through a backbone fiber, other N ports on the left side may be connected to a burst optical signal receiver of an operating wavelength of the ONU through a distribution fiber and a corresponding distribution fiber on a right side. A backbone fiber port No. 1 of the OLT on the left side of the star-shaped coupler corresponds to a distribution fiber port No. 1 on the right side is discarded, i.e., it is not connected to any ONU. A downlink continuous optical signal at an OLT operating wavelength *λ_{down}* is transmitted through the backbone fiber (corresponding to the first public port 111) on the left side of the star-shaped coupler to the right side and is output from all port branch fibers on the right side (corresponding to the second side interface 113). This downlink continuous optical signal at an operating wavelength *λ_{down}* and an uplink burst optical signal at an operating wavelength *λᵤₚ* are split by the second wavelength division multiplexing member 133 and then separately led out from the port branch fiber. The uplink burst optical signal at an ONU operating wavelength *λᵤₚ* enters the second connection port 2 of the annular member 120 through the distribution fiber, is output from the third connection port 3, is transmitted through the fiber on the right side of the star-shaped coupler to the left side, and is output from any port on the left side. The uplink burst optical signal is output from a port No. 1 on the left side of the star-shaped coupler to reach the OLT, and the uplink burst optical signals are output from the other N ports on the left side. An uplink burst optical signal at an operating wavelength *λᵤₚ* output from a certain port on the left side is taken as an example, is combined with a downlink optical signal at an operating wavelength *λ_{down}* decomposed by the second wavelength division multiplexing member 131 and the second wavelength division multiplexing member 133 at the corresponding port on the right, enters the first connection port 1 of the circulator, and is output from the second connection port 2. Referring to FIG. 6, the ONU includes a downlink optical signal continuous/burst receiver and an uplink optical signal burst transmitter and a three-port circulator 500. A downlink direction continuous/burst sent optical signal at a wavelength *λ_{down}* and an uplink burst optical signal at an operating wavelength *λᵤₚ* enter a port 2 of the three-port circulator 500 from a distribution fiber, are output from a port 3 of the three-port circulator 500 and then enter the optical signal continuous receiver and the optical signal burst receiver respectively. An uplink burst optical signal at an optical signal wavelength of *λᵤₚ* sent in the uplink direction in a burst enters the port 1 of the three-port circulator 500 and is output from the port 2 of the three-port circulator 500 to the second connection port 2 of the annular member 120 of the optical distribution apparatus 100.

It may be understood, with reference to FIG. 7, that in a fifth aspect, a network system provided according to an embodiment of the present application includes:
at least one optical line terminal 200;
an optical distribution network unit 300 of the second aspect, wherein the optical distribution network unit 300 further includes an optical distribution apparatus 100 and a plurality of second light splitting modules 310, and the optical line terminals 200 are connected to first public ports 111 of the optical distribution apparatus 100 in one-to-one correspondence; and third public ports 311 of the second light splitting modules 310 are respectively connected to second connection ports of annular members 120 of the optical distribution apparatus 100 one by one; and
a plurality of optical network apparatuses 400, all connected to a plurality of second branch ends of the second light splitting modules 310 one by one.

In some embodiments, as shown with reference to FIG. 7, the optical distribution apparatus 100 may be used in an ODN with multi-stage splitter networking to realize flexible network networking. Direct communications between all ONUs may be realized in the case where the optical distribution apparatus 100 is used in a first-stage splitter and a conventional splitter (corresponding to the second light splitting module 310) is used in a second-stage splitter to remain unchanged. The uplink burst optical signal only needs to pass through the first-stage optical distribution apparatus 100 once, but needs to pass through the second-stage splitter twice, and the embodiment of the present application can reduce the loss of power consumption once as compared to the structure in which the first and second stages both use splitters.

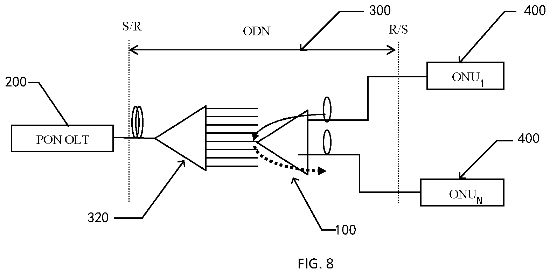

It may be understood, with reference to FIG. 8, that in a sixth aspect, a network system provided according to an embodiment of the present application includes:
at least one optical line terminal 200;
an optical distribution network unit 300 of the second aspect, wherein a plurality of optical distribution apparatuses 100 are arranged, the optical distribution network unit 300 further includes at least one third light splitting module 320, fourth public ports of the third light splitting module 320 are connected to the optical line terminals 200 one by one; and first public ports 111 of the plurality of the optical distribution apparatuses 100 are respectively connected to a plurality of third branch ends of the third light splitting module 320 one by one; and
a plurality of optical network apparatuses 400, all connected to second connection ports of annular members 120 of the optical distribution apparatuses 100 one by one.

It needs to be noted that, referring to FIG. 8, the optical distribution apparatus 100 is used in the second-stage splitter, and the uplink burst optical signal needs to pass through the first-stage optical distribution apparatus 100 only once to realize the direct communication between the ONUs where the second-stage splitter is located, and does not need to pass through the first-stage splitter even once. Therefore, compared with the conventional two-stage splitter, the network system of the embodiment of the present application is more capable of reducing the loss of communication between ONUs.

It needs to be noted that FIG. 5 to FIG. 8 are networking of the network embodiments of the embodiments of the present application. In an actual application, the optical distribution apparatus 100 may be applied to networking other than FIG. 5 to FIG. 8, such as arranging more than 3 levels of splitter networking, and other optical distribution apparatuses 100 or splitters are also added between the two optical distribution apparatuses 100 of FIG. 8. In this regard, those skilled in the art may obtain a network system other than the embodiments of the present application based on the optical distribution apparatus 100 of any one of the first aspect and in conjunction with the accompanying drawings 1 and 2.

It needs to be noted that the first wavelength division multiplexing member 131, the third wavelength division multiplexing member 132, and the second wavelength division multiplexing member 133 may be devices with the same functions as the wavelength division multiplexer, or they may be wavelength division multiplexers.

The embodiments of the present application include the following. Each of the third connection ports is connected to one second side interface, each of the second side interfaces communicates with the plurality of the first side interfaces, the first side interfaces are connected to the corresponding first connection ports, therefore, for each uplink optical signal input through the corresponding second connection port, after passing through the star-shaped coupling module once, it is looped back, by each of the first side branch interfaces, to an optical path where the first side branch interface and the corresponding first connection port are located to be combined with the first downlink signal and output from the second connection port, so as to realize a direct communication with a plurality of optical network apparatuses after passing through the star-shaped coupling module once. Moreover, uplink optical signals of the plurality of second side interfaces are further sent to the first public port to be output, so that uplink direction transmission of single-fiber services can be realized when the uplink optical signals are service signals. Similarly, after the downlink optical signal is divided into a plurality of first downlink optical signals, the first downlink optical signals are multiplexed to the first connection ports through the corresponding wavelength division multiplexing modules and are output from the second connection ports, realizing the downlink direction transmission of service signals. Compared to a solution in the related art adopting a splitter, the optical distribution apparatus of the embodiments of the present application is adopted to perform service transmission in a single-fiber scenario, and at the same time enables the optical signal for the direct communication between the optical network apparatuses to only need to pass through the star-shaped coupling module once without reflection, and the loss of optical power is lower, which is favorable for a practical application. Based on this, the optical distribution apparatus, the optical distribution network unit, and the network system of the embodiments of the present application can reduce the loss of optical power during the direct communication between the optical network apparatuses.

## Claims

1. An optical distribution apparatus, comprising:
a star-shaped coupling module, wherein two sides of the star-shaped coupling module are respectively provided with a plurality of first side interfaces and a plurality of second side interfaces, and each of the second side interfaces communicates with a plurality of the first side interfaces; and a plurality of the first side interfaces comprise a plurality of first side branch interfaces and at least one first public port;
a plurality of annular members, wherein the annular members are provided with unidirectionally communicating first connection ports, second connection ports and third connection ports, the first connection ports are connected to the first side branch interfaces in one-to-one correspondence; the third connection ports are connected to one of the second side interfaces; and the second connection ports are configured to output input uplink optical signals from the communicating second side interfaces to the first public port and a plurality of the first side branch interfaces; and
a plurality of wavelength division multiplexing modules, wherein the plurality of wavelength division multiplexing modules are in one-to-one correspondence with the plurality of annular members; the wavelength division multiplexing modules are each configured to combine a first downlink optical signal with an uplink optical signal output by the corresponding first side branch interface to the corresponding first connection port; and the first downlink optical signal is an optical signal obtained by splitting a downlink optical signal input to the first public port.

2. The optical distribution apparatus according to claim 1, wherein the wavelength division multiplexing modules each comprise a first wavelength division multiplexing member and a second wavelength division multiplexing member, the first wavelength division multiplexing member is arranged between the first connection port of the corresponding annular member and the corresponding first side branch interface; and the second wavelength division multiplexing member is arranged between the third connection port of the corresponding annular member and the corresponding second side interface.

3. The optical distribution apparatus according to claim 1, wherein the wavelength division multiplexing modules each comprise a first wavelength division multiplexing member, and the first wavelength division multiplexing member is arranged between the first connection port of the corresponding annular member and the corresponding first side branch interface.

4. The optical distribution apparatus according to claim 3, wherein the wavelength division multiplexing modules each further comprise a third wavelength division multiplexing member; and the third wavelength division multiplexing member is connected to the first public port.

5. The optical distribution apparatus according to claim 4, wherein the optical distribution apparatus further comprises a first light splitting module, a second public port of the first light splitting module is connected to the third wavelength division multiplexing member, and a plurality of first branch ends of the first light splitting module are respectively connected to the first wavelength division multiplexing members of a plurality of the wavelength division multiplexing modules.

6. An optical distribution network unit, comprising at least one optical distribution apparatus according to any one of claims 1 to 5.

7. A network system, comprising:
at least one optical line terminal;
an optical distribution network unit according to claim 6; and
a plurality of optical network apparatuses, connected to the optical line terminal through an optical distribution apparatus.

8. A network system, comprising:
at least one optical line terminal;
an optical distribution network unit according to claim 6, wherein one optical distribution apparatus is provided, and the optical line terminals are connected to first public ports of the optical distribution apparatus in one-to-one correspondence; and
a plurality of optical network apparatuses, respectively connected to a second connection port of one of annular members of the optical distribution apparatus one by one.

9. A network system, comprising:
at least one optical line terminal;
an optical distribution network unit according to claim 6, wherein the optical distribution network unit further comprises one optical distribution apparatus and a plurality of second light splitting modules, and the optical line terminals are connected to first public ports of the optical distribution apparatus in one-to-one correspondence; and third public ports of the second light splitting modules are respectively connected to second connection ports of annular members of the optical distribution apparatus one by one; and
a plurality of optical network apparatuses, all connected to a plurality of second branch ends of the second light splitting modules one by one.

10. A network system, comprising:
at least one optical line terminal;
an optical distribution network unit according to claim 6, wherein a plurality of optical distribution apparatuses are provided, the optical distribution network unit further comprises at least one third light splitting module, fourth public ports of the third light splitting module are connected to the optical line terminals one by one; and first public ports of a plurality of the optical distribution apparatuses are respectively connected to a plurality of third branch ends of the third light splitting module one by one; and
a plurality of optical network apparatuses, all connected to second connection ports of annular members of the optical distribution apparatuses one by one.
